# EUROPÄISCHE PATENTSCHRIFT

(11) **EP 0 495 120 B1**
(45) Veröffentlichungstag und Bekanntmachung des Hinweises auf die Patenterteilung: **20.11.1996**
(21) Anmeldenummer: 91913669.7
(22) Anmeldetag: 02.08.1991
(51) Int. Cl.: B01J 20/28, C09K 3/32, A61L 15/00

(54) **FLÜSSIGKEIT ABSORBIERENDER BLOCK**
LIQUID-ABSORBING BLOCK
BLOC ABSORBANT LES LIQUIDES

(30) Priorität: 03.08.1990 JP 206518/90
(43) Veröffentlichungstag der Anmeldung: 22.07.1992
(73) Patentinhaber: UNI-CHARM COMPANY LIMITED, Kawanoe-Shi, Ehime 799-01 (JP)
(72) Erfinder: FUJIWARA, Masatoshi, 2-5-3, Kamenokou, Shizuoka 436 (JP); SAKAI, Yutaka, 5-8-100, Koyanagi-cho, Tokyo 183 (JP); INAGAKI, Hiroyuki, 2-2-11, Kamenokou, Shizuoka 436 (JP); Ohshita, Masahiko, 1-31 Yamada-Nishi, Suita-shi, Osaka-fu (JP)
(74) Vertreter: Sperling, Rüdiger, Dipl.-Ing.
(86) Internationale Anmeldenummer: JP9101038
(87) Internationale Veröffentlichungsnummer: WO9202297

(56) Entgegenhaltungen:
- JP-A- 0 261 177
- JP-A- 0 274 254
- JP-A- 2 117 801
- JP-A- 6 129 350
- JP-A- 6 162 463
- JP-A-59 135 149
- JP-A-63 288 258

## Beschreibung

### Technisches Gebiet der Erfindung:

Die vorliegende Erfindung betrifft einen flüssigkeitsabsorbierenden Block für Wasser oder andere Flüssigkeiten, der Späne bzw. Schnitzel oder Flocken eines faserigen Basismaterials umfaßt, an welchem während dessen Polymerisation ein stark flüssigkeitsabsorbierendes Polymer fixiert bzw. eingebaut wird, die mit hydrophilen Fasern gemischt und durch Formpressen oder ähnliches verbunden werden.

### Stand der Technik:

Die Verwendung von stark flüssigkeitsabsorbierendem Polymerpulver als Flüssigkeitsabsorptionsmittel für Abfallflüssigkeiten wie etwa Wasser oder andere Flüssigkeiten verschiedener Art ist bekannt. Das für diesen Zweck verwendete Polymerpulver neigt gewöhnlich zum Verstreuen und beginnt, wenn es feucht ist, direkt zu fließen, so daß derartiges Polymerpulver in den meisten Fällen zwischen Seidenpapierlagen eingefaßt ist oder mit Pulpefasern gemischt wird, worauf es einer geeigneten Druckbearbeitung unterworfen wird, um es zur eigentlichen Verwendung als Flüssigkeitsabsorptionsmittel zu festigen. Hat jedoch das Polymer in diesem verfestigten Flüssigkeitsabsorptionsmittel einmal Flüssigkeit absorbiert und ist damit gequollen, so trennt sich das Polymer vom Seidenpapier oder den Pulpefasern und fließt aus dem Flüssigkeitsabsorptionsmittel aus oder verklebt sich zu Klumpen. Die Flüssigkeitsabsorptionsmittel nach dem Stand der Technik weisen somit eine unzureichende Formstabilität auf, wodurch als Folge die Flüssigkeitsabsorptionsfähigkeit oftmals während der Verwendung beeinträchtigt wurde.

Zur Lösung dieser Probleme wurden bereits verschiedene Flüssigkeitsabsorptionsmittel vorgeschlagen, die meist typischerweise ein faseriges Basismaterial umfassen, an dem während der Polymerisation ein absorbierendes Polymer fixiert wurde. Dazu zählt ein ein Flüssigkeitsabsorptionsmittel, bei dem Zellulosefasern als faseriges Basismaterial verwendet werden. Dabei tritt das Problem auf, daß die Faser ihre ursprüngliche Steifigkeit verliert und mit der Flüssigkeitsaufnahme durch das Anfeuchten zusammenfällt. Demgemäß wird der zum Aufquellen des Polymers erforderliche Raum eingeschränkt und das Erreichen der für die Menge des verwendeten Polymers erwarteten Flüssigkeitsabsorptionskapazität wird erschwert. Zur Lösung dieses Problems wurde ein Flüssigkeitsabsorptionsmittel unter Verwendung von synthetischen Fasern vorgeschlagen, das nicht ohne weiteres seine ursprüngliche Steifigkeit verliert, auch wenn es angefeuchtet wird. Ein derartiges Flüssigkeitsabsorptionsmittel weist jedoch durch die hydrophoben Eigenschaften, die allgemein für synthetische Fasern typisch sind, eine schlechte Flüssigkeitspermeabilität und ein mangelhaftes Flüssigkeitsverteilungsvermögen auf und es ist schwierig, die entsprechende Flüssigkeitsabsorptionsgeschwindigkeit und - menge vorherzusagen. Zur Verbesserung des Flüssigkeitsverteilungsvermögens zeigt die unter der Nr. 1984-135149 im Amtsblatt veröffentlichte japanische Patentanmeldung eine flüssigkeitsabsorbierende Schicht auf, die ein synthetisches Faservlies umfaßt, in das während dessen Polymerisation ein stark flüssigkeitsabsorbierendes Polymer eingebaut wurde, sowie eine Zellulosefaserschicht hoher Dichte, die durch Druckbehandlung zu einem Stück verbunden wurden. Die Zellulosefaserschicht trägt zwar sicherlich zur Verbesserung des Flüssigkeitsverteilungsvermögens in oberflächlicher Richtung auf dem Synthesefaservlies bei, jedoch nicht zur Verbesserung der Flüssigkeitsverteilung in Richtung der Stärke bzw. Dicke des Vlieses. Wird entsprechend ein Flüssigkeitsabsorptionsmittel durch schichtweises Anordnen mehrerer derartiger Lagen hergestellt, so ist sowohl die Geschwindigkeit als auch die Größe der Flüssigkeitsabsorption in Richtung der verschiedenen Schichten bezüglich der von der Menge des verwendeten Polymers erwarteten Werte nicht ausreichend, so daß daher dieser Schichtkörper für Anwendungszwecke, die eine große Flüssigkeitsabsorptionsmenge erfordern, nicht geeignet ist.

Angesichts dieser Situation ist es Aufgabe der Erfindung, einen flüssigkeitsabsorbierenden Block aufzuzeigen, der sowohl hinsichtlich der Formstabilität, der Permeabilität wie auch der Flüssigkeitsverteilung in Richtung auf das Innere des Flüssigkeitsabsorptionsmittels zu deutlich verbessert ist, so daß eine große Flüssigkeitsabsorptionsmenge erzielt wird.

### Darstellung der Erfindung:

Die vorstehend ausgeführte Aufgabe wird erfindungsgemäß durch einen flüssigkeitsabsorbierenden Block gelöst, der eine Mischung von wenigstens zwei Bestandteilen umfaßt, wobei der eine eine frei zu wählende Anzahl von Spänen ist, die jeweils ein faseriges Basismaterial sowie ein integral an diesem Basismaterial fixiertes flüssigkeitsabsorbierendes Polymer enthalten, und der andere eine hydrophile Faser, und wobei weiterhin der flüssigkeitsabsorbierende Block geformt wird, indem diese Mischung unter Druck mit in zufälliger Anordnung ausgerichteten Spänen zu einem Stück geformt wird.

Vorzugsweise umfaßt das faserige Basismaterial eine Synthetikfaser und die hydrophile Faser Zellulosefasern.

Vorzugsweise haben die Späne jeweils eine unbestimmte Form und/oder Größe.

Für den Fachmann ist es offensichtlich, daß der Ausdruck "am faserigen Basismaterial integral fixiertes bzw. eingebautes, stark flüssigkeitsabsorbierendes Polymer" genauer ausgedrückt als "integral am faserigen Basismaterial während dessen Polymerisation fixiertes, stark flüssigkeitsabsorbierendes Polymer" zu verstehen ist.

Bei dem flüssigkeitsabsorbierenden Block mit vorstehend beschriebenem Aufbau fließt das flüssigkeitsabsorbierende Polymer nicht ohne weiteres aus dem faserigen Basismaterial aus, auch wenn es angefeuchtet und aufgequollen ist, da das stark flüssigkeitsabsorbierende Polymer am faserigen Basismaterial während dessen Polymerisation fixiert bzw. eingebaut wurde. Das Synthetikfasern umfassende faserige Basismaterial fällt nicht ohne weiteres zusammen, auch wenn es angefeuchtet und aufgequollen ist, womit ausreichend Platz gelassen wird, der vom vollständig aufgequollenen Polymer eingenommen werden kann. Die Späne, die jeweils das stark flüssigkeitsabsorbierende Polymer und das faserige Basismaterial enthalten und vorzugsweise eine unbestimmte Form und/oder Größe aufweisen, werden mit der Zellulosefaser, die als die hydrophile Faser dient, gemischt, und die Mischung wird durch Formpressen zu einem flüssigkeitsabsorbierenden Block gepreßt. Im so erhaltenen flüssigkeitsabsorbierenden Block wirkt die verteilt zwischen den Spänen vorliegende Zellulosefaser zur Zufuhr von Wasser oder einer anderen Flüssigkeit zum stark flüssigkeitsabsorbierenden Polymer, so daß durch diese Funktion der Zellulosefaser auch das tief im Inneren des flüssigkeitsabsorbierenden Blockes vorliegende stark flüssigkeitsabsorbierende Polymer mit Wasser oder einer anderen Flüssigkeit gleichmäßig versorgt wird. Somit kann die Gesamtmenge des stark flüssigkeitsabsorbierenden Polymers im flüssigkeitsabsorbierenden Block effektiv eingesetzt werden. Die jeweils faseriges Basismaterial und das während dessen Polymerisation an diesem fixierte, stark flüssigkeitsabsorbierende Polymer enthaltenden Späne werden gemischt und mit den Zellulosefasern wechselseitig in zufälliger Ausrichtung in Berührung gebracht, wenn diese Bestandteile dem Formpressen unterzogen werden, so daß ein im wesentlichen isotroper flüssigkeitsabsorbierender Block erhalten werden kann. Genauer gesagt wirken die Absorption, Permeation und Diffusion von Wasser oder anderen Flüssigkeiten auch tief im Inneren des Blockes in alle Richtungen. Auf diese Weise ermöglicht es der erfindungsgemäße flüssigkeitsabsorbierende Block, eine große Menge von Wasser oder anderen Flüssigkeiten zu absorbieren.

### Kurze Beschreibung der Zeichnung:

- Fig. 1 bis 3: sind perspektivische Darstellungen von verschieden geformten flüssigkeitsabsorbierenden Blöcken, die gemäß der Erfindung aufgebaut sind;
- Fig. 4 und 5: sind Schnittdarstellungen des ursprünglichen Aufbaus der Späne; und
- Fig. 6: ist eine Schnittdarstellung, die ein Beispiel für die Verwendungsweise des flüssigkeitsabsorbierenden Blockes zeigt.

### Bevorzugte Ausführungsform:

Anhand der nachfolgenden Beschreibung einer bevorzugten Ausführungsform unter Bezug auf die beigefügte Zeichnung wird die Erfindung besser verständlich.

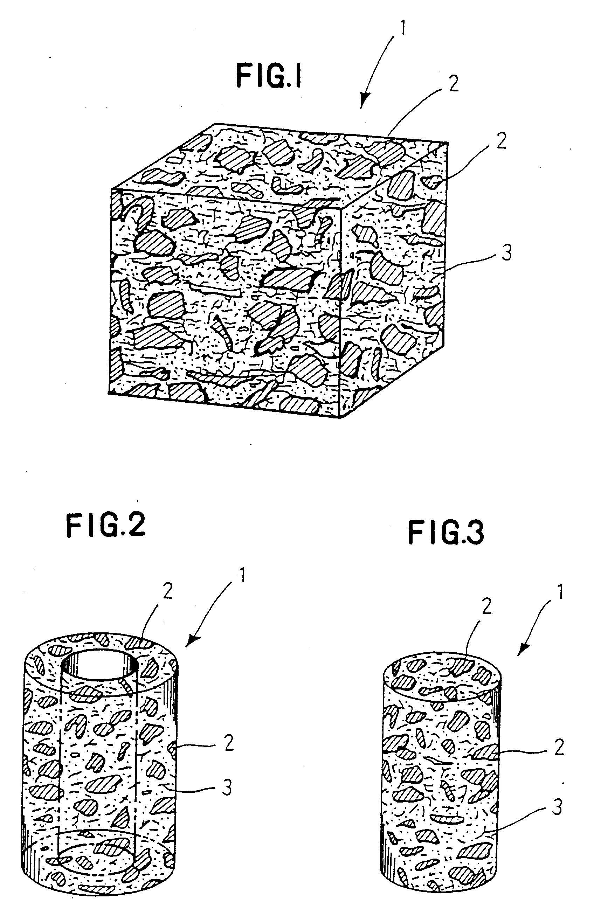

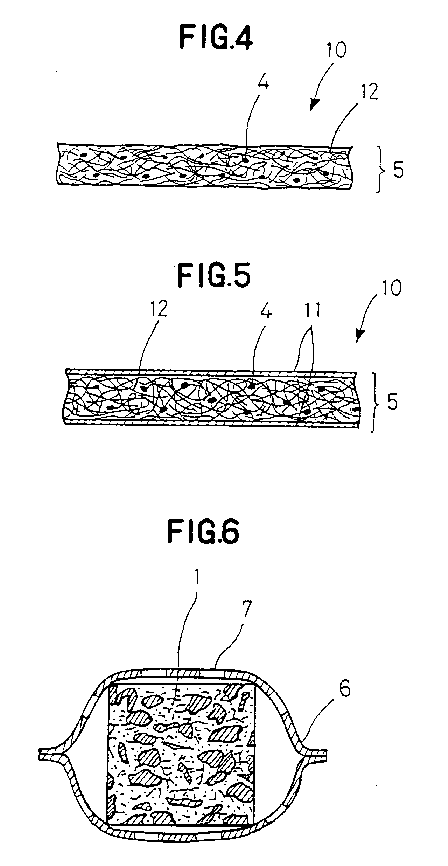

In Fig. 1 bis 3 sind flüssigkeitsabsorbierende Blöcke verschiedener Form perspektivisch dargestellt. Fig. 1 zeigt einen rechteckigen Block 1, Fig. 2 einen hohlzylindrischen Block 1 und Fig. 3 einen vollzylindrischen Block 1. Die Blocks 1 enthalten jeweils Späne 2 unbestimmter Form sowie Fasermasse 3, die die zwischen den Spänen 2 gebildeten Zwischenräume füllt. Ein Span 2 enthält ein faseriges Basismaterial 5 und ein stark flüssigkeitsabsorbierendes Polymer 4, das, wie weiter unter beschrieben werden wird, während der Polymerisation des faserigen Basismaterials 5 an diesem fixiert wurde bzw. in dieses eingebaut wurde. Die Fasermasse 3 wird durch Feinbrechen (oder Fibrillieren) von Zellstoffpappe erhalten und enthält im wesentlichen Zellulosefasern mit stark hydrophilen Eigenschaften. Der Block 1 wird dadurch erhalten, daß in Schritten die in einer für eine bestimmte Anwendung geeigneten Größe vorbereiteten Späne 2 mit der Fasermasse 3 mit einem Trockengewichtsverhältnis von 95 zu 5 bis 5 zu 95 gemischt werden und anschließend die Mischung mit einem Oberflächendruck von 5 bis 200 kg/cm² in einer nicht dargestellten Form entsprechend der gezeigten Anordnung oder einer anderen geeigneten Anordnung formgepreßt werden. Es sei angemerkt, daß die Anzahl der Späne 2 nach Wunsch gewählt werden kann. Durch diesen Formpreßvorgang kann ein mit hoher Dichte gepreßter Block erzielt werden und die Formstabilität des Blockes vor und nach der Flüssigkeitsabsorption kann durch Aufsprühen einer geeigneten Menge von Wasser auf die Mischung oder Zufügen eines geeigneten Bindemittels zur Mischung verbessert werden. Ein besonders bevorzugtes Ergebnis wird durch Zufügen einer geeigneten warmverschweißbaren Faser in einer Menge von wenigstens 10 Gew.-%, die als Bindemittel dient, zu dieser Mischung erzielt, so daß die schweißbare Faser und die jeweiligen Fasern der Bestandteile während des Formpreßvorganges miteinander verschweißt werden können. Es ist wichtig, daß die Späne 2 mit der Fasermasse unter ausreichendem Rühren vermischt werden, um sicherzustellen, daß die Fasermasse 3 zwischen den Spänen 2 gleichmäßig verteilt ist, welche ihrerseits im Block 1 gleichmäßig verteilt werden, um zu vermeiden, daß die jeweiligen Bestandteile ungleichmäßig verteilt und besonders ausgerichtet vorliegen. Auch ist es möglich, anstelle des Formpressens zur Bildung des Blockes 1 Kalandrieren oder andere Formtechniken anzuwenden sowie den so gebildeten Block 1 in die für die tatsächliche Verwendung erforderliche Länge und Form zuzuschneiden.

Fig. 4 und 5 zeigen als Beispiel in Schnittdarstellungen die ursprüngliche, schichtartige Struktur des Spanes 2. Diese ursprüngliche Struktur 10 kann eine Form und Größe annehmen, die den speziellen Herstellungsgeräten entspricht und enthält wenigstens das faserige Basismaterial 5 und das stark flüssigkeitsabsorbierende Polymer 4. Fig. 5 zeigt eine spezielle Struktur 10, bei der die in Fig. 4 dargestellte Struktur zwischen zwei Lagen von Seidenpapier 11 gelegt ist.

In dem in Fig. 1 gezeigten Block werden Späne verwendet, die jeweils aus der in Fig. 5 gezeigten Ausgangsstruktur 10 geformt sind. Die einzelnen Späne werden durch Abschneiden, Brechen, Zerstampfen oder Fibrillieren der Ausgangsstruktur 10 durch für den jeweiligen Fall geeignete Mittel in kleinere Stücke erhalten. Während es bevorzugt ist, Späne 2 von unbestimmter Form und Größe zu verwenden, ist es ebenso möglich, Späne 2 von spezifischer Form und Größe zu verwenden. Während des Schneidevorganges und dem nachfolgenden Bearbeiten dient das Seidenpapier 11 einerseits dazu, das stark flüssigkeitsabsorbierende Polymer gegen das Herabfallen vom faserigen Basismaterial 5 zu schützen und andererseits zur Verbesserung der Flüssigkeitsverteilung während der Verwendung des Blockes. Das faserige Basismaterial 5 dient als Trägerstruktur, an der das stark flüssigkeitsabsorbierende Polymer 4 während deren Polymerisation fixiert wird und umfaßt vorzugsweise einen lagen- oder blattartigen Aufbau, in dem die individuellen Fasern in komplizierter Weise umeinander geschlungen sind. Als derartige blattartige Struktur kann ein Faservlies, vorzugsweise ein synthetisches Faservlies und besonders bevorzugt ein aus Hohlfasern, die nach dem Pressen eine hohe Rückstellelastizität aufweisen, bestehendes Faservlies oder ein aus konjugierten Fasern bestehendes Faservlies verwendet werden. Ein solches Faservlies kann mit einer Bindefaser, z.B. einer warm verschweißbaren Faser, wie bereits vorstehend erwähnt, behandelt werden, um die Verschlingung der Faservliesfasern zu verbessern. Diese synthetischen Fasern verlieren auch nach der Absorption von Flüssigkeit ihre Steifigkeit nicht und können in wirksamer Weise dem stark flüssigkeitsabsorbierenden Polymer den für sein vollständiges Aufquellen ausreichenden Raum zur Verfügung stellen. Zur Verwendung in der Erfindung weist das Faservlies vorzugsweise eine Feinheit von 1 bis 8 Denier, eine Faserlänge von 10 mm oder mehr und ein Gewicht von 15 bis 150 g/m² auf.

Bevorzugterweise wird bei dieser Erfindung als das stark flüssigkeitsabsorbierende Polymer 4 ein synthetisches Polymer verwendet, dessen Ausgangsstoff ein wasserlösliches Monomer ist. Z.B. wird eine wäßrige Lösung eines Acrylatmonomers, das einen Initiator des Redoxtyps und ein Vernetzungsmittel enthält, mittels Walzbeschichten oder anderer geeigneter Techniken in einer Menge von 500 g/m² auf das Faservlies 5 aufgetragen und anschließend durch Erwärmen, Bestrahlen mit Elektronenstrahl und/oder eine andere geeignete Behandlung polymerisiert und ausgehärtet. Das stark flüssigkeitsabsorbierende Acrylatpolymer 4, das so erhalten wird, ist fest an den einzelnen Fasern 12 fixiert bzw. eingebaut und umgibt diese. Es ist bekannt, daß ein derartiges stark flüssigkeitsabsorbierendes Polymer 4 Wasser, wäßrige Lösungen oder ähnliches in einer Menge gut absorbiert, die dem mehrfachen des Eigengewichts bis dem vielfachen einer mit dem Faktor 10 multiplizierten Menge seines Eigengewichts entspricht, wobei es aufquillt und geliert. Vorzugsweise wird das stark flüssigkeitsabsorbierende Polymer 4 in einer Menge von 100 bis 1500 Gew.-% bezüglich dem faserigen Basismaterial 5 verwendet.

Fig. 6 zeigt ein Beispiel der Art und Weise, wie der vorstehend beschriebene Block 1 verwendet wird. Bei dem hier gezeigten Beispiel ist der in Schnittdarstellung gezeigte Block 1 von einem wasserdichten Polyethylenbeutel 6 umschlossen. Der Beutel 6 ist an seinen Umfangskanten wasserdicht verschweißt, jedoch an wenigstens einer Seite mit mehreren Öffnungen 7 versehen, um eine Wasserdurchlässigkeit zu erzielen, so daß Wasser oder eine andere Flüssigkeit von der Außenseite durch die Öffnungen 7 in den Beutel fließen kann und vom Block 1 absorbiert werden kann. Hinsichtlich einer besseren Lager- und Transportfähigkeit ist es bevorzugt, den Block 1 in Verbindung mit dem flüssigkeitsdurchlässigen Beutel 6 zu verwenden. Es ist jedoch auch möglich, den Block 1 ohne den Beutel 6 zu verwenden.

Wird der Block 1 mit Wasser oder einer anderen zu absorbierenden Flüssigkeit in Berührung gebracht, so beginnt die Flüssigkeitsabsorption durch das stark flüssigkeitsabsorbierende Polymer 4 und die Fasermasse 3 an allen Seiten des Blockes 1, worauf das Wasser oder andere Flüssigkeiten aufgrund eines Kapillareffektes durch die faserige Pulpe 3 eindringen und sich zum stark flüssigkeitsabsorbierenden Polymer 4 verteilen kann, das tief im Inneren des Blockes 1 vorhanden ist. Somit wird das im Block 1 vorhandene stark flüssigkeitsabsorbierende Polymer 4 in seiner Gesamtheit genutzt. Block 1 ist somit als Flüssigkeitsabsorptionsmittel für Abwässer bzw. Abfallflüssigkeiten, die von verschiedenen Werksanlagen, Baustellen, Krankenhäusern oder anderen Einrichtungen stammen, verwendbar. Zur Verbesserung des äußeren Erscheinungsbildes des Blockes 1 wird ein hydrophiles Schichtmaterial, wie etwa Seidenpapier, im voraus in die oben erwähnte Form eingelegt, die Mischung der Späne 2 und der Fasermasse 3 wird auf dieses aufgelegt und anschließend wird der Formpreßvorgang durchgeführt. Dieses an der Oberfläche des Blockes 1 klebende Schichtmaterial verbessert nicht nur das äußere Erscheinungsbild des Blockes, sondern fördert auch die Verteilung der Flüssigkeit.

### Industrielle Anwendbarkeit:

Der erfindungsgemäße Block ist als Flüssigkeitsabsorptionsmittel für Abfallflüssigkeiten geeignet, die von verschiedenen Herstellungsbetrieben, Baustellen, Krankenhäusern oder anderen Einrichtungen stammen.

## Patentansprüche

1. Flüssigkeitsabsorbierender Block, umfassend eine Mischung aus wenigstens zwei Bestandteilen, von denen ein Bestandteil eine wählbare Anzahl von Spänen ist, die jeweils ein faseriges Basismaterial und ein integral an diesem faserigen Basismaterial fixiertes, stark flüssigkeitsabsorbierendes Polymer enthalten und der andere hydrophile Fasern sind, wobei der flüssigkeitsabsorbierende Block durch Verbinden der Mischung mit zufällig ausgerichteten Spänen unter druckbeaufschlagtem Zustand geformt wird.

2. Flüssigkeitsabsorbierender Block nach Anspruch 1, wobei das faserige Basismaterial synthetische Fasern umfaßt und die hydrophilen Fasern Zellulosefasern umfassen.

3. Flüssigkeitsabsorbierender Block nach Anspruch 1, wobei die Späne jeweils unbestimmte Form und/oder Größe haben.

## Claims

1. Liquid-absorbing block, including a mixture of at least two components, of which one component is a selectable number of chips which in each case contain a fibrous base material and a highly liquid-absorbing polymer fixed integrally to this fibrous base material, and the other component is hydrophilic fibres, wherein the liquid-absorbing block is shaped by combining the mixture with randomly oriented chips in a pressurised state.

2. Liquid-absorbing block according to claim 1, wherein the fibrous base material includes synthetic fibres and the hydrophilic fibres include cellulose fibres.

3. Liquid-absorbing block according to claim 1, wherein the chips have in each case indefinite shape and/or size.

## Revendications

1. Bloc absorbant les liquides, comprenant un mélange d'au moins deux composants, dont l'un est une quantité sélectionnable de particules contenant un substrat fibreux et un polymère à forte absorption des liquides fixé à ce substrat fibreux pour former une peau intégrée, et l'autre, des fibres hydrophiles, le bloc absorbant les liquides étant formé en réalisant la liaison du mélange contenant des particules aléatoirement orientées mis sous pression.

2. Bloc absorbant les liquides selon la revendication 1, dans lequel le substrat fibreux comprend des fibres synthétiques, et les fibres hydrophiles, des fibres de cellulose.

3. Bloc absorbant les liquides selon la revendication 1, dans lequel les particules ont toutes une forme et/ou une grosseur indéterminée.
